**Europäisches Patentamt**

**European Patent Office**

**Office européen des brevets**

(19)

(11) Publication number: **0 128 500**
**A2**

# EUROPEAN PATENT APPLICATION

(12)

(21) Application number: **84106373.8**

(22) Date of filing: **05.06.84**

(51) Int. Cl.³: **H 04 M 1/10**

(30) Priority: **14.06.83 US 504324**

(43) Date of publication of application: **19.12.84**
**Bulletin 84/51**

(84) Designated Contracting States: **DE FR GB IT NL**

(71) Applicant: **Telelogic, Inc., 196 Broadway, Cambridge Massachusetts 02139 (US)**

(72) Inventor: **Jackson, Joseph M., 33 Fresh Pond Place, Cambridge, MA 02138 (US)**

(74) Representative: **Endlich, Fritz, Dipl.-Phys., Postfach 1326, D-8034 Germering (DE)**

(54) **Telephone with cradle having no moving parts.**

(57) A telephone having a handset and a cradle therefor. The cradle has no external moving parts. A magnet and a magnetic reed switch are used for sensing on-hook and off-hook conditions. In a first embodiment the magnetic reed switch is provided inside the cradle, in a position which is proximate the earpiece end of the handset when the handset is resting on the cradle; the earpiece houses the magnetic for operating the switch. The earpiece of the handset houses a receiver member which includes a loudspeaker having a voice coil wound on a permanent magnet. If that magnet does not generate a magnetic field strong enough to be sensed by and to actuate (i.e., close) the reed switch when the handset is on the cradle, an additional magnet may be used to supplement the magnetic field strength. In a second embodiment, the positions of the magnet and the switch are reversed – i.e., the magnet is placed in the cradle and the magnetic switch is in the handset. As an alternative to magnetic field sensing, optical sensing may be employed, with LED's in the cradle and an optical detector in the handset, or vice-versa.

## Cross-Reference to Related Applications

This application is related to commonly-assigned design patent application serial no. (not yet known), titled Design for Telephone Set, Attorneys' Docket No. B67-005.

## Field of the Invention

This invention relates to the field of telephones and, more particularly, to a telephone handset and a cradle therefor.

## Background of the Invention

In recent years, competition among suppliers of telephone equipment has led to a tremendous proliferation of new telephone designs. Among these are numerous designs for telephone handsets which include, in one integral device, an earpiece (also referred to as, or including, a speaker), a microphone, a dial or keypad mechanism and a housing holding together all those elements. The handset usually is designed to be held in one hand while the telephone is in use. In addition to the handset, many of these telephones also employ a cradle or stand for mounting or supporting the handset on a wall or desk when it is not in use. The cradle generally includes some means for sensing when the handset is resting on the cradle (i.e., is "on-hook") and when it has been removed (i.e., is "off-hook"). This sensing means has in the past been some kind of mechanical apparatus for using the weight of the handset to operate a switch, by direct or indirect action on the switch. The use of such a mechanism, however, requires that an opening be provided in the housing of the cradle so as to allow a lever or other member connected to the switch to pass therethrough. The position of the member is altered by the handset when it is placed on or lifted from the cradle. This, in turn, changes the state of the switch in a predetermined way.

Since the cradle switch is actuated by an externally-positioned member, such as a lever, users and others sometimes use such external members to "hang up" the telephone. This particularly occurs when the user wishes to re-dial, following an unsuccessful attempt to place a call, or at the completion of one call when the user wishes to make another call right away. It may also occur against the user's wishes, though, when someone either accidentally or intentionally pushes against or moves the switch actuation member.

Accordingly, it is an object of the present invention to provide a telephone employing a handset and a cradle therefor wherein the cradle has no external moving parts.

Yet another object of the present invention is to provide a handset and cradle therefor wherein the sensing of the position of the handset relative to the cradle does not require the use of any moving parts.

It is a further object of the invention to provide a telephone which cannot be hung up against the user's wishes by moving a member on the cradle.

## Summary of the Invention

The present invention pertains to a telephone having a handset and a cradle therefor. The cradle in the example illustrated is adapted for wall mounting, but it will readily be appreciated that the invention is applicable to desk-mounted or other type telephones, as well. The cradle has no external moving parts. To sense the lifting of the handset, a magnetic reed switch is provided inside the cradle, in a position which is proximate the receiver end of the handset when the handset is resting on the cradle. The receiver end of the handset includes a loudspeaker which contains a voice coil wound on a permanent magnet. That magnet generates a magnetic field strong enough to be sensed by and to actuate (i.e., close) the reed switch when the handset is on the cradle. If the voice coil magnet does not generate a strong enough field to actuate the switch, an additional magnet may be provided, of course, to supplementits magnetic field.

As an alternative, the position of the magnet and the reed switch may be revised - i.e., the magnet may be placed in the cradle and the reed switch may be placed in the handset.

In yet another alternative, other non-moving sensing arrangements may be employed, such as optical sensing systems.

This invention is pointed out with particularity in the appended claims. The above and further objects and advantages of the invention may be better understood by referring to the following description, taken in conjunction with the accompanying drawings.

Brief Description of the Drawing

In the drawing:

FIG. 1 is an isometric view of the telephone of the present invention, from one side thereof, showing the handset mounted on the cradle and having the reed switch in the cradle;

FIG. 2 is a front plan view of the handset of Fig. 1;

FIG. 3 is a front plan view of the cradle of Fig. 1; and

FIG. 4 is an isometric view of another embodiment the telephone of the present invention, with the reed switch in the handset.

## Detailed Description

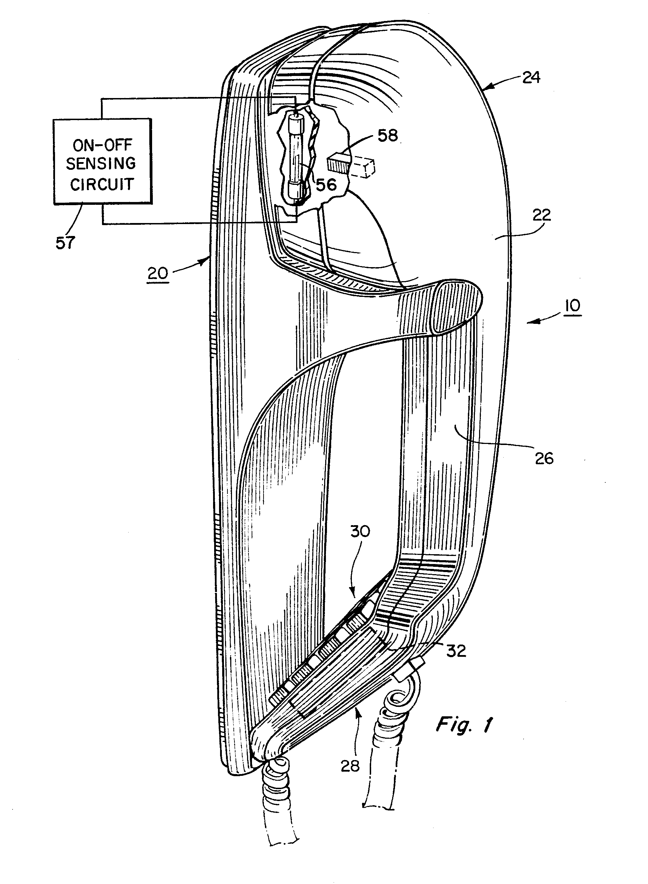

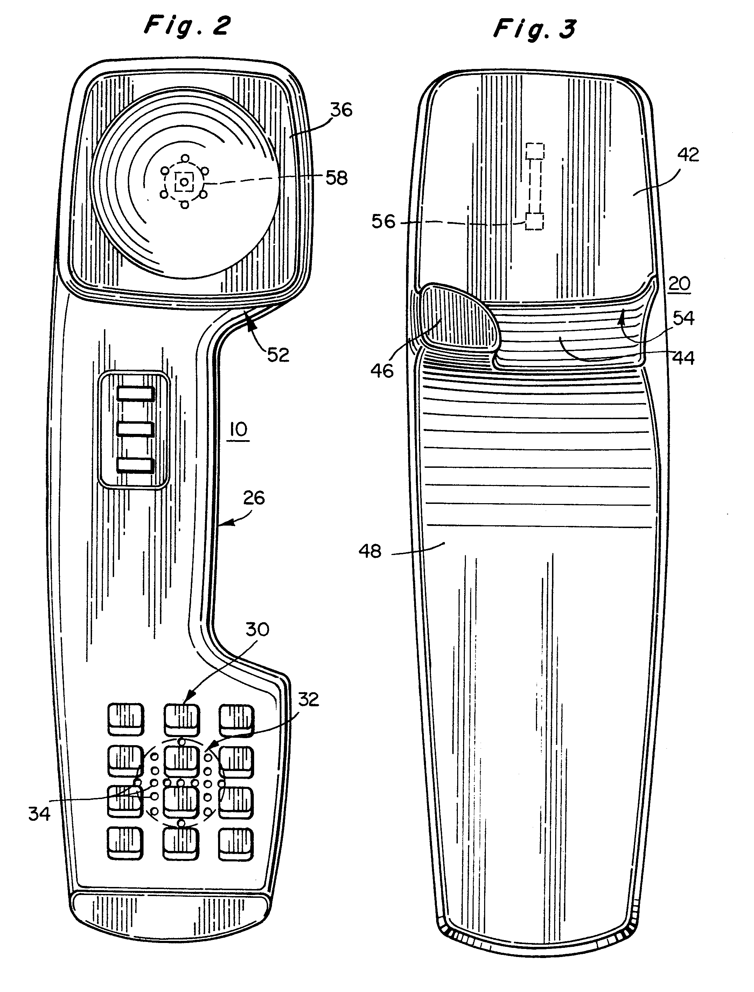

The telephone of the present invention is shown in Figs. 1 - 4, to which reference is now made. It comprises a handset 10 and a cradle 20.

The handset 10 is formed of a plastic housing or body 22, molded in the unique shape which is illustrated. The plastic body 22 may be considered as having three regions: a top region 24, which encloses the earpiece or speaker; a bottom region 28, which houses the keypad 30 and a microphone 32 (shown in phantom, disposed interior with respect to keypad 30); and a middle region 26, which bridges the top and bottom regions and provides a handgrip area.

Small apertures 34 are provided in the surface of the handset 10 in bottom region 28 to allow the user's voice to reach microphone 32.

Keypad 30 comprises a standard tone generation keypad for telephone tone dialing.

A cradle 20 for hanging handset 10 on a wall is shown in Figs. 1, 3 and 4. The front portion of this cradle - that is, the portion to which the handset mates or mounts - is unique in that it is a solid, unbroken piece of plastic with no moving parts and with no apertures to provide passage for moving parts. Cradle 20 comprises an earpiece-receiving area 42, a handset supporting ledge 44, a handset retaining arm 46 and a lower section 48. It should be understood, of course, that lower section 48 could be omitted without loss of function, since it does not support the weight of the phone. It does, however, somewhat aid in balancing the phone on supporting ledge 44 and supporting arm 46, so inclusion of lower section 48 is perferred.  Arm 46 extends outwardly from the back of the cradle (against the wall) wall and is curved slightly upwardly and inwardly toward the centerline of the cradle.  When the handset is "on-hook", arm 46 catches the shoulder 52 of the handset 10.  Shoulder 52 is provided on the underside of earpiece 36, in the area where the handset tapers down in width from the earpiece to the handgrip 26.  The upper surface of arm 46 and the righthand end of ledge 44, indicated generally at 54, are turned slightly upward and are given a slight concave curvature, also, which tends to retain the handset at rest.  Thus the ledge 44 and arm 46 co-act to support handset 10 laterally and prevent it from sliding off the cradle to either side.  The top surfaces of ledge 44 and arm 46 also support handset 10 vertically.

In a first embodiment of the invention (Figs. 1-3), a magnetically sensitive switch, such as a magnetic reed switch, is mounted interior to the earpiece-receiving portion 42 of cradle 20, as indicated by the object shown in phantom at numeral 56.  Reed switch 56 is sufficiently sensititve to detect the proximity of a magnet or magnets 58 housed in the handset when the handset is on the cradle.  The contacts of the reed switch may, for example, close with the handset on the cradle and open when the handset is lifted off the cradle.  The switch 56 is connected to conventional circuitry 57 for indicating whether the handset is "on-hook" or "off-hook".

The magnet 58 may be the permanent magnet which is used as the core for a loudspeaker voice coil in the telephone's receiver element, or it may be a separate magnet or the combination of the two.

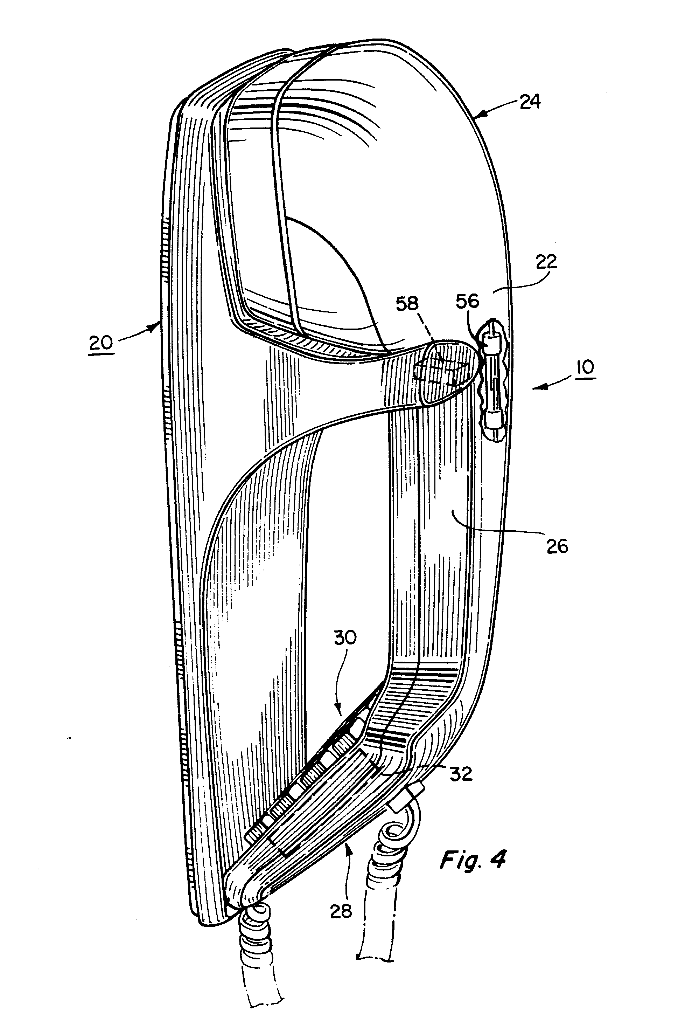

In a second embodiment of the invention, shown in Fig. 4, the positions of the magnet and switch are reversed. That is, the magnet 58 is mounted in the cradle and the magnetic switch 56 is mounted in the handset. Otherwise, the operation is precisely the same as for the first embodiment.

Of course, other sensing means may be employed which also avoid the use of moving parts. For example, electro-optic sensing may be employed. This would entail use of an optical signal source, such as one or more light-emitting diodes, in the cradle or handset, and an optical detector in the other, opposing member (i.e., the handset or cradle).

While the foregoing description is limited to two specific embodiments of this invention, it will be apparent that this invention can be practiced in telephones and telephone handsets having diverse construction and design, while nevertheless receiving some or all of the foregoing objects or advantages of this invention. Therefore, it is the object of the appended claims to cover all such variations, modifications and obvious improvements as come within the true spirit and scope of this invention.

0128500

What is claimed as new and desired to be secured by Letters Patent of the United States is:

1. A telephone set comprising, in combination:

a handset;

a cradle adapted to support the handset when the handset is deposited thereon; and

means for detecting whether the handset is on or off the cradle, such means being adapted to sense the depositing of the handset on the cradle without the use of moving parts.

2.  The apparatus of claim 1 wherein the means for detecting the handset includes a magnet disposed in the handset and means internal to the cradle for sensing the proximity of the magnet.

3.  The apparatus of claim 2 wherein the handset includes an earpiece for generating audible output from electrical telephone signals, and the earpiece includes a voice coil wound on a permanent magnet, the magnet included in the handset comprising said permament magnet.

4.  The apparatus of claim 2 wherein the means internal to the cradle for sensing the proximity of the magnet includes a magnetic reed switch.

5.  The apparatus of claim 1 wherein the means for detecting the handset includes a magnet disposed in the cradle and means internal to the handset for sensing the proximity of the magnet.

6.  The apparatus of claim 5 wherein the means internal to the handset for sensing the proximity of the magnet includes a magnetic reed switch.

7. The apparatus of claim 1 wherein the means for detecting the handset includes an optical source and an optical detector adapted to sence the output of the optical source when the handset is resting on the cradle.

1/3

0128500

ON-OFF
SENSING
CIRCUIT

57

20

58

56

24

22

10

26

30

32

28

*Fig. 1*

**Fig. 2**

**Fig. 3**

36

58

52

10

26

30

32

34

42

56

20

54

44

46

48

*Fig. 4*